# EUROPEAN PATENT SPECIFICATION

(11) **EP 3 508 828 B1**
(45) Date of publication and mention of the grant of the patent: **06.11.2024**
(21) Application number: 18212847.0
(22) Date of filing: 17.12.2018
(51) Int. Cl.: G01J 3/28, G01J 3/02, G01J 3/12

(54) **A DEVICE FOR ACQUSITION OF HYPERSPECTRAL AND MULTI-SPECTRAL IMAGES WITH SLIDING LINEAR OPTICAL FILTER**
VORRICHTUNG ZUR ERFASSUNG VON HYPERSPEKTRALEN UND MULTISPEKTRALEN BILDERN MIT EINEM GLEITENDEN LINEAREN OPTISCHEN FILTER
DISPOSITIF D'ACQUISITION D'IMAGES HYPERSPECTRALES ET MULTISPECTRALES COMPORTANT UN FILTRE OPTIQUE LINÉAIRE COULISSANT

(30) Priority: 28.12.2017 TR 201722570
(43) Date of publication of application: 10.07.2019
(73) Proprietor: Havelsan Teknoloji Radar San. Tic. A.S., 06750 Ankara (TR)
(72) Inventor: SIRIN, IZZET, 06750 ANKARA (TR)
(74) Representative: Yamankaradeniz, Kemal

(56) References cited:
- CN-A- 107 367 885
- US-A- 4 599 001

## Description

### TECHNICAL FlELD

The present invention relates to an imaging technology which offers a novel method to form and capture Hyperspectral and Multi-spectral images.

### KNOWN METHODS OF THE TECHNIQUE

Conventional methods to acquire Hyperspectral and Multi-spectral images often include Pushbroom, Whiskbroom and Rotationary filter wheel methods.

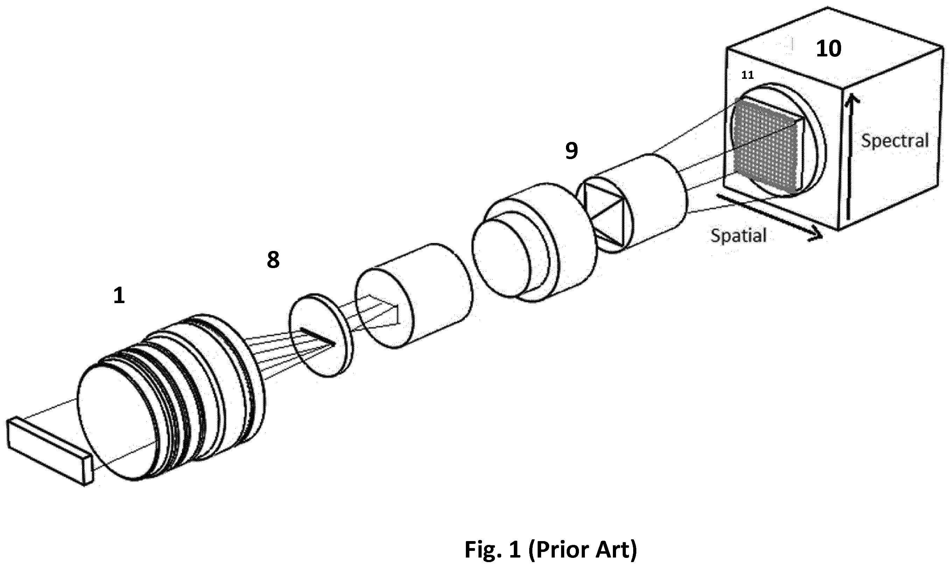

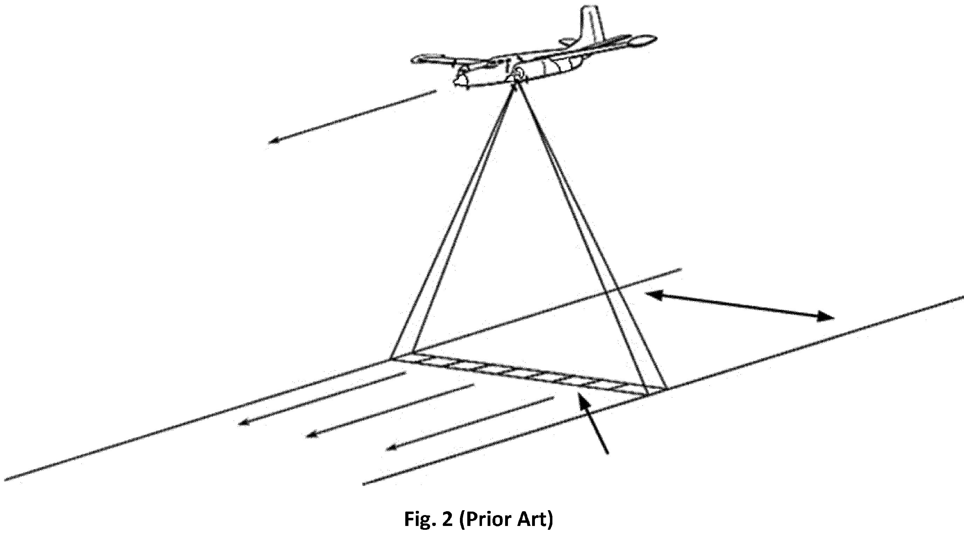

The most common technique in this field is Pushbroom method. In this technique, single line image information is steered to beam splitter prism with a optical slit mechanism which is located behind the camera lens. Because of the special optic on the beam splitter prism, image can be splitted into desired number of spectral bands which consist a single line array image information onto the camera sensor that located behind the prism. Thus, every column on the camera sensor unit has the information of image with different spectral bands. Therefore camera's sensor array's rows contains the information of every respective spectral bands. Technical drawing respect to Pushbroom method is given in Fig. 1. Due to the non-moving target object or camera, image formed with using this method corresponds to one row of the target. Because of that, in order to interpret the image by using Pushbroom method, target object or camera must be moved in an axis which is perpendicular to optical slit's plane. Thus multispectral image can be achieved. Technical drawing with regard to how camera is moving in Pushbroom method, detector array, the direction of plane and optical slit plane is given by Fig. 2.

In order to achieve meaningful image of objects with pushbroom method, camera have to sweep on objects. If camera does not sweep over objects, the detector just take the image of objects as much as a single row's resolution which is insufficient to identify these objects. Disadvantage of this method is difficulties of manufacturing optical components and their high cost. To achieve real time image, camera or target object have to move which makes this method both hard and costly.

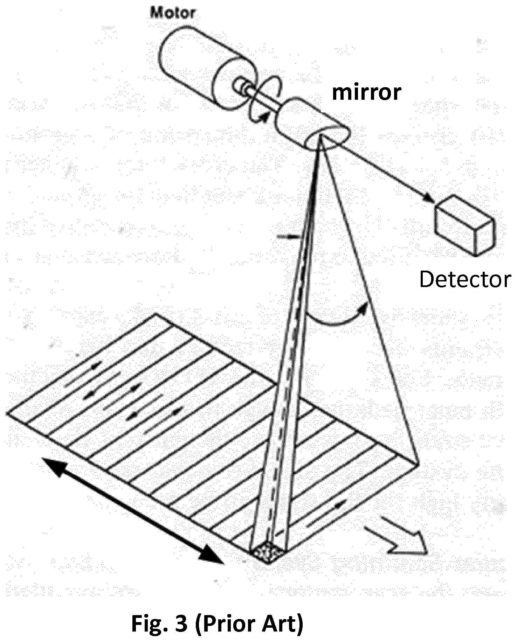

Whiskbroom method is the other common technique in this field. This method is similar to Pushbroom method except that instead of an ordinary camera, a detector which consists a single line, a motor and mirrors have been used. Generally Whiskbroom method have been used in satellites to achieve Multi-spectral images. The technical drawing related to Whiskbroom camera is given in Fig. 3. Scanning mirror is part of the optical mechanism, sweeps the scene along the perpendicular axis of platform's movement and form a single row image. Thus a single row of scene is created. Due to the perpendicular movement of platform's with respect to the scanning mirror, when the mirror take another row of image, sequential rows of image compose the multi-spectral image of the desired scene or objects. Scanning image direction is also given im Fig. 3. The advantage of this technique with respect to Pushbroom is simpler optical mechanisms required. However spectral resolution and signal to noise ratio is lower relative to Pushbroom method.

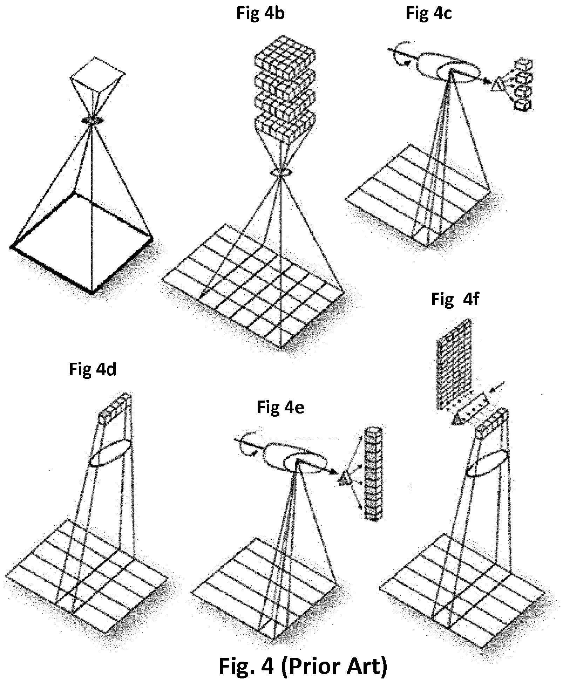

In Fig. 4, difference between Pushbroom and Whiskbroom methods to form hyperspectral image is given. Common difficulty related to both technique is the required movement of camera to form hyperspectral image of fixed objects. The movement of camera is both costly and lucubratory.

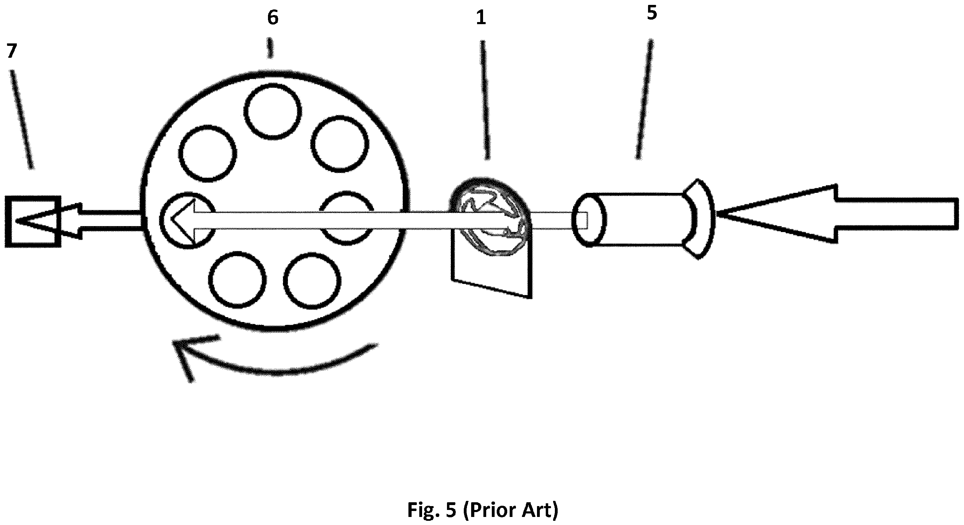

Another known application related to this field is rotationary wheel technique. Also this technique is relatively basic compared to other methods. As illustrated in Fig. 5, in order to achieve multi-spectral image of an object, a filter wheel located on the front of a camera with different spectral bands enables the composing of multi-spectral image of fixed objects without the need for camera movement. The main advantage of this technique compared to known techniques such as Pushbroom and Whiskbroom, is camera movement not necessarily needed. Components of this system are relatively cheap and non-complex. The only requirement is the movement of filter wheel.

On the other hand, disadvantages of this system are larger physical volume and low spectral resolution originates from large volume. Due to size of the filter wheel is large, the size of the system is also increasing if the high number of spectral bands needed. Because of the high response time of the filter wheel, the possible multi-spectral frame rate is limited.

CN 107 367 885 A relates to a hyper-spectral camera based on a linear filter placed on a sliding rod.

Present problems related to known methods that stated in this documents are;
- Required optical sub-components for Pushbroom and Whiskbroom hyperspectral imaging are complex, expensive and items usually take longer lead time.
- Pushbroom and Whiskbroom cameras can not acquire muti-spectral images without camera movement.
- Due to the high response time needed to rotate filter wheel mechanism, frames take longer time.
- By using rotationary filter wheel, acquisition of image for fixed objects is possible but as the number of bands increases, physical size also increases which leads to finding the appropriate solution for most applications less likely.

### SUMMERY OF INVENTION

To eliminate the disadvantages given above and bring new advantages to the field, this invention is related to sliding linear filter hyperspectral and multi-spectral imaging.

This invention enables the acquisition of fixed objects' hyperspectral and multi-spectral image without the need for camera movement with high frame rate.
- The first aim of this invention is by using a sliding linear platform, present a technique which acquire hyperspectral and multi-spectral image of any object in the field of view without the need for camera movement.
- The second aim of this invention is present a technique which enables high performance hyperspectral and multi-spectral camera without the need for expensive special design optical components.
- The third aim of this invention is present a technique that includes a segmented filter which is even the number of bands increased, the size of filter remains same. Thus performs the goal with less physical size.
- The fourth aim of this invention is present a technique that enables much higher frame rates compared to other techniques. For instance because of the longer mechanical time constant needed to actuate filter wheel mechanism, filter wheel technique does limit the achievable frame rate.
- The fifth aim of this invention is present a structure that enables hyperspectral and multi-spectral image with less modified or available lens and sensors.
- The sixth aim of this invention is decreasing the cost of hyperspectral and multi-spectral imaging that extend the usage in applications related to agriculture and soil fertility.
- The seventh aim of this invention is decreasing the cost of hyperspectral and multi-spectral imaging that extend the usage in applications related to defence industry, border security, critical area security, homeland security, custom security, transportation security, environment monitoring, food monitoring, remote sensing etc.

This invention is related to sliding linear filtered hyperspectral and multi-spectral camera according to claim 1. Preferred configurations are specified in dependent claim 2.

In the drawings:
Fig 1. Pushbroom technique (previous method)
Fig 2. Pushbroom sweeping technique (previous method)
Fig 3. Whiskbroom camera (previous technique)
Fig 4. Pushbroom-Whiskbroom techniques comparison (previous methods)
Fig 5. Rotationary wheel technique (previous method)

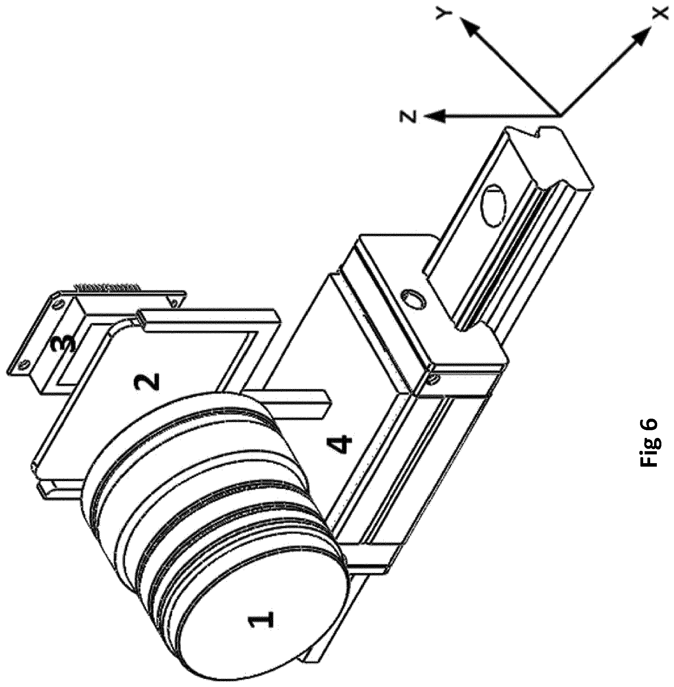

Fig.6 Sliding linear filter technique
Fig 7. Segmented filter structure

### Elements, Sub-sections and Components of the Invention

In order to explain this invention which relates a sliding linear filtered hyperspectran and multi-spectral camera more precisely, components and elements of the invention are numbered in figures for this document.
1. Lens of the camera
2. Segmented filter
3. Camera detector
4. Sliding linear platform

### Detailed Explanation of the Invention

In this detailed explanation, the subject of the invention is explained with examples which is free to all restraint effects in order to understand the subject clearly. According to this, a sliding filtered hyperspectral and multi-spectral camera is described.

In conventional methods, to acquire hyperspectral and multi-spectral image without the movement of camera, rotational wheel mechanisms have been used and because of the time required to rotate the filter wheel is long, high resolution and high frame rate is notably infeasible.

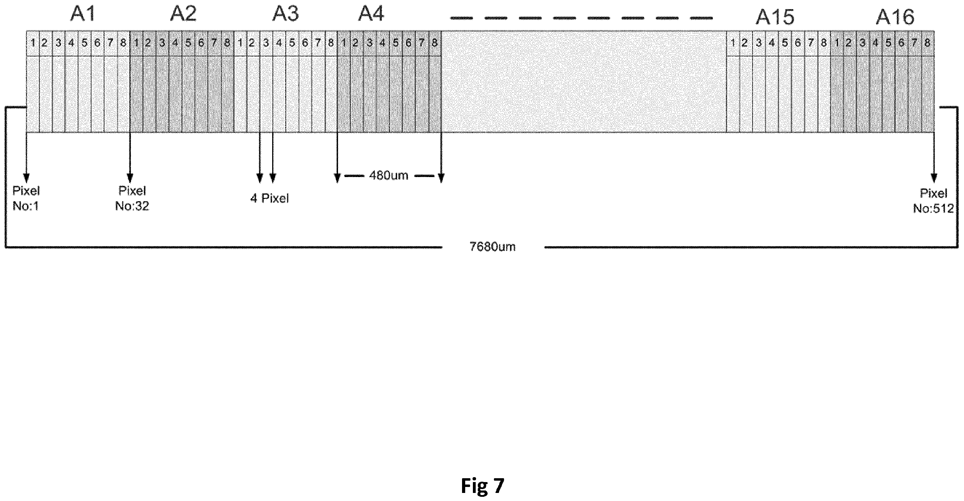

Owing to sliding linear filtered hyperspectral and multi-spectral camera, segmented filter (2) can be moved with the linear movement platform (4) which enables high spectral resolution and high frame rate possible. To give an example, in Fig. 7 predefined segmented filter has 8 spectral bands (2) and with a 120 frame per second (FPS) camera, it can perform 120/8 = 15 FPS multi-spectral image. For the very reason, this frame rate is much more than conventional multi-spectral camera's FPS. With this rate, it is almost the FPS of real time image with relatively low cost and instead of singular band information, multi-spectral imaging can be realized. By means of using particular method which is specific to this invention, cost effective muti-spectral cameras can be used in broad fields such as defence industry, border security, critical facilities, homeland and custom security, transportation, environment and food monitoring etc. According to intended purpose, these cameras enable surveying, detection and increasing the product efficiency and considered to extend the usage of multi-spectral cameras in return.

Operating principle and the structure of hyperspectral and multi-spectral camera are described below.

Sub-components and elements of sliding linear filtered hyperspectral and multi-spectral camera are lens of the camera (1), detector of the camera (3), segmented filter (2) and linear sliding platform (4).

Segmented filter (2) is placed onto the linear sliding platform (4) which is located in between lens of the camera (1) and the detector of the camera (3). When the linear platform moving in x- axis, for each frame, acquisition of different spectral images on the camera detector (3) can be possible which depends on the design of the segmented filter (2).

According to specifications of present invention, any camera of different spectral bands without a specific pixel size which is available on the market can be used to acquire at least one spectral band resolution multi-spectral image by using a linear segmented filter (2). By controlling the linear sliding platform with constant speed in the x-axis, acquisition of image on the camera detector for at least one frame for each spectral band can be possible. When the linear sliding platform completed at least one pixel width motion, it sends an electronic signal to the camera detector (3) which starts the acquisition of the frame. On the segmented filter, there is a optical filter which has at least one pixel width and at least one spectral band. This is placed on the segmented filter (2) which has at least one spectral band and embedded sequentially. Used lens for this invention is the camera lens (1).

In Fig. 7, an example of segmented filter (2) and its structure has been illustrated which is needed to acquire multi-spectral image. For the camera detectors (3) with different spectral bands which has 15 µm pixel size and available on the market, a segmented filter (2) to acquire 8 bands resolution multi-spectral image is shown. In order to increase spectral band resolution or changing to different camera, changing the design of the segmented filter (2) will be sufficient. For example, four pixel width camera detector (3) elements acquire different spectral band images. When the linear sliding platform (4) moves with constant speed in the x-axis, for every 8 frame that acquired by the camera detector (3), an 8 spectral band resolution of an image is acquired. In this technique, motion profile of the linear sliding platform (4) and the camera detector's frame speed have to be synchronous. When the linear sliding platform (4) completed a motion of 4 pixel width, sends an electronic trigger signal to camera detector (3) which in return start a new frame.

In Fig. 7, there is a segmented filter (2) which have 8 different spectral bands and each band has a width of 4 pixels. Each filter group consists of 8 filter bands and 16 groups of bands have been placed on the segmented filter (2) sequentially. In Fig. 7, for every A1, A2, A3... A15 corresponds an image. A1 consists the pixel numbers 1 to 32. A2 illustrates a 4 pixel width. In case of A4, it shows 480 µm. For A16, it ends with pixel number 512. The distance between A1 to A16 is 7680 µm.

In parallel with that provided information;
This invention presents a technique that consists any camera detector (3) with any pixel size, a camera lens(1) and a linear sliding filter (2) that acquire hyperspectral or multi-spectral image and characterized by;
- A linear movement platform (4) which sends an electronic trigger signal when it completes at least one pixel width motion along the x-axis with constant speed to camera detector (3) to start acquisition of a frame,
- A segmented filter (2) placed on a linear movement platform that is located between camera detector (3) and camera lens (1) which enables high frame rate and high spectral resolution by moving with the linear movement of the platform.

## Claims

1. A hyperspectral or multi-spectral camera with a linear sliding filter, comprising:
a camera detector (3) with any pixel size;
a camera lens (1) to focus an image onto the camera detector (3);
a linear sliding platform (4) enabling to acquire at least one band resolution per image on the detector and configured to move with constant velocity along an axis and to send an electronic signal to the camera detector (3) to start acquisition of a frame when it completed a motion of at least one pixel width;
a segmented filter (2) which is placed onto the linear sliding platform (4) which is between the camera lens (1) and the camera detector (3) so as to be moving with the linear sliding platform (4); the segmented filter (2) having multiple sequential spectral bands,
wherein
a motion profile of the linear sliding platform (4) and the camera detector's frame rate are synchronous such that when the linear sliding platform (4) has completed a motion corresponding to a spectral band filter's width, the linear sliding platform (4) is configured to send an electronic trigger signal to the camera detector (3) which in return starts a new frame.

2. A hyperspectral or multi-spectral camera with linear sliding filter in accordance with claim 1, wherein a segmented filter (2) has 8 spectral band resolution to acquire 8 bands resolution multi-spectral image.

## Patentansprüche

1. Hyperspektrale oder multispektrale Kamera mit einem linearen gleitenden Filter, umfassend:
einen Kameradetektor (3) mit einer beliebigen Pixelgröße;
eine Kameralinse (1) zum Fokussieren eines Bildes auf den Kameradetektor (3);
eine lineare gleitende Plattform (4), die ermöglicht, zumindest eine Bandauflösung pro Bild auf dem Detektor zu erfassen und konfiguriert ist, um sich mit konstanter Geschwindigkeit entlang einer Achse zu bewegen und um ein elektronisches Signal an den Kameradetektor (3) zu senden, um Erfassung eines Rahmens zu starten, wenn sie eine Bewegung von zumindest einer Pixelbreite abgeschlossen hat;
einen segmentierten Filter (2), der auf der linearen gleitenden Plattform (4) platziert ist, die zwischen der Kameralinse (1) und dem Kameradetektor (3) ist, um sich mit der linearen gleitenden Plattform (4) zu bewegen; wobei der segmentierte Filter (2) mehrere aufeinanderfolgende Spektralbänder aufweist,
wobei
ein Bewegungsprofil der linearen gleitenden Plattform (4) und die Rahmenrate des Kameradetektors synchron sind, sodass, wenn die lineare gleitende Plattform (4) eine Bewegung abgeschlossen hat, die der Breite eines Spektralbandfilters entspricht, die lineare gleitende Plattform (4) konfiguriert ist, um ein elektronisches Auslösesignal an den Kameradetektor (3) zu senden, der im Gegenzug einen neuen Rahmen startet.

2. Hyperspektrale oder multispektrale Kamera mit linearem gleitenden Filter nach Anspruch 1, wobei ein segmentierter Filter (2) Auflösung von 8 Spektralbändern aufweist, um multispektrales Bild mit Auflösung von 8 Bändern zu erfassen.

## Revendications

1. Caméra hyperspectrale ou multispectrale avec filtre coulissant linéaire, comprenant :
un détecteur de caméra (3) avec une quelconque taille de pixel ;
une lentille de caméra (1) pour focaliser une image sur le détecteur de caméra (3) ;
une plateforme coulissante linéaire (4) permettant d'acquérir au moins une résolution de bande par image sur le détecteur et conçue pour se déplacer à vitesse constante le long d'un axe et envoyer un signal électronique au détecteur de caméra (3) pour démarrer l'acquisition d'une trame lorsque elle a effectuée un mouvement d'au moins une largeur de pixel ;
un filtre segmenté (2) qui est placé sur la plateforme coulissante linéaire (4) qui se trouve entre la lentille de caméra (1) et le détecteur de caméra (3) de façon à se déplacer avec la plateforme coulissante linéaire (4) ; le filtre segmenté (2) comportant de multiples bandes spectrales séquentielles,
un profil de mouvement de la plateforme coulissante linéaire (4) et ladite fréquence de trames du détecteur de caméra étant synchrones de sorte que lorsque la plateforme coulissante linéaire (4) a effectuée un mouvement correspondant à la largeur d'un filtre à bande spectrale, la plateforme coulissante linéaire (4) soit conçue pour envoyer un signal de déclenchement électronique au détecteur de caméra (3) qui en retour démarre une nouvelle trame.

2. Caméra hyperspectrale ou multispectrale avec filtre coulissant linéaire selon la revendication 1, un filtre segmenté (2) comportant une résolution de 8 bandes spectrales pour acquérir une image multispectrale de résolution à 8 bandes.
